# EUROPÄISCHE PATENTSCHRIFT

(11) **EP 2 160 997 B1**
(45) Veröffentlichungstag und Bekanntmachung des Hinweises auf die Patenterteilung: **31.10.2012**
(21) Anmeldenummer: 08015578.1
(22) Anmeldetag: 04.09.2008
(51) Int. Cl.: A61C 3/03, A61C 1/14

(54) **Kupplungsvorrichtung zur Verwendung mit einem medizinischen, insbesondere schwingungsübertragenden, Handstück**
Coupling device for use with a medicinal, in particular vibration transferring hand tool
Dispositif de connection pour utiliser avec une pièce à main médicale, en particulier à transmission de vibrations

(43) Veröffentlichungstag der Anmeldung: 10.03.2010
(73) Patentinhaber: W & H Dentalwerk Bürmoos GmbH, 5111 Bürmoos (AT)
(72) Erfinder: Brandner, Jürgen, 5113 St. Georgen (AT); Guggenberger, Wolfgang, 5114 Göming (AT)

(56) Entgegenhaltungen:
- EP-A- 1 454 595
- DE-A1- 10 039 198
- DE-A1-102007 004 808

## Beschreibung

Die vorliegende Erfindung bezieht sich auf eine Kupplungsvorrichtung zur Verwendung mit einem medizinischen, vorzugsweise schwingungsübertragenden, Handstück zur Präparation von Oberflächen von Zähnen.

Die mittels Schwingung angetriebenen Werkzeuge werden mittels einer Werkzeugaufnahme an einem medizinischen Handstück, welches mit einer Schwingungsquelle versehen ist, befestigt. Die Schwingungsquelle, vorzugsweise ein Piezoantrieb, aktiviert die Werkzeugaufnahme über eine schwingungsübertragende Achse mittels Schall oder Ultraschall. Die Werkzeuge weisen neben einem Lagerbereich zur Befestigung an der Werkzeugaufnahme einen Arbeitskopf zur Oberflächenpräparation von Zähnen auf.

Bei diesen medizinischen Behandlungsvorrichtungen spielt die Befestigung der Werkzeuge an der Werkzeugaufnahme zur Übertragung der Schwingung eine wichtige Rolle.

Eine derartige Kupplungsvorrichtung für ein medizinisches Handstück und Werkzeug ist aus der DE 102005058879 B4 bekannt.

Nur durch eine feste Verbindung des Werkzeuges mit der Werkzeugaufnahme kann eine Übertragung der Schwingungsenergie auf das Werkzeug erfolgen. Auf Grund dessen ist es im Stand der Technik üblich, derartige Werkzeuge mittels einer Schraubverbindung an der Werkzeugaufnahme zu befestigen, um einen festen Sitz zu gewährleisten.

Derartige im Stand der Technik bekannte Schraubverbindungen sind mit einem Gewinde versehen. Hierbei weist der Lagerbereich des Werkzeuges ein Aussengwinde und die Werkzeugaufnahme ein Innengewinde auf. Diese profilierten Einkerbungen, die fortlaufend um einen zylinderartigen Lagerbereich verlaufen, weisen vorzugsweise einen Steigungswinkel von 2 bis 3 Grad auf.

Bei dieser Ausgestaltung der Schraubverbindung ist es auf Grund der Gewindegänge erforderlich, das Werkzeug mittels mehrerer Umdrehungen in die Werkzeugaufnahme am Handstück einzuschrauben.

Als nachteilig dieser Ausgestaltung der Kupplungsvorrichtung erweist sich das zeitraubende Verbinden und Lösen der Schraubverbindung. Das Heraus- und Hineinschrauben des Werkzeuges erfordert das mehrmalige händische, mittels Finger oder Werkzeugschlüssel, Ansetzen des Anwenders an das medizinische Werkzeug, um die Gewindegänge des Werkzeuges mit denen der Werkzeugaufnahme zu verschrauben.

Weiterer Nachteil der im Stand der Technik bekannten Schraubverbindung ist die Gefahr einer fehlerhaften Verbindung zwischen Werkzeug und Werkzeugaufnahme auf Grund unsachgemäßen Einsetzens des Aussengewinde des Werkzeuges in das Innengewinde der Werkzeugaufnahme oder auf Grund Verschmutzungen in den Gewindegängen.

Der vorliegenden Erfindung liegt daher die Aufgabe zugrunde, eine Kupplungsvorrichtung für ein medizinisches, insbesondere schwingungsübertragendes, Handstück zu schaffen, welches bei einfacher Herstellung die Nachteile des Stand der Technik vermeidet und es insbesondere ermöglicht, ein medizinisches Werkzeug schnell und einfach auszuwechseln.

EP 1 454 595 offenbart eine Kupplungsvorrichtung gemäß dem Oberbegriff von Anspruch 1.

Gemäß der Erfindung zur lösbaren Verbindung eines Werkzeuges mit einer Werkzeugaufnahme eines medizinischen Handstückes ist die Kupplungsvorrichtung, die aus einem ersten am Werkzeug vorgesehenen Kupplungselement und einem zweiten am Handstück vorgesehenen Kupplungselement besteht, als Kugel-Laufbahn Verbindung ausgebildet. Eines der beiden Kupplungselemente weist eine im Wesentlichen wendelförmig um die Längssachse der Kupplungsvorrichtung verlaufenden Führungsnut auf, in die ein Führungselement des anderen Kupplungselements eingreift, wobei das zumindest eine Führungselement als Kugel oder Halbkugel ausgebildet ist.

Das Werkzeug der Kupplungsvorrichtung weist neben einem Werkzeugschaft und einem Arbeitskopf zur Präparation von Oberflächen, einen Lagerbereich zur Befestigung an einem medizinischen Handstück auf. Dieser Lagerbereich ist zumindest mit einer, vorzugsweise mehreren regelmäßig um das Werkzeug beabstandeten, mindestens teilweise um die Längsachse der Kupplungsvorrichtung wendelförmigen Führungsnuten versehen, welche als Laufbahn für ein an der Werkzeugaufnahme befindliches Führungselement dienen. Der Querschnitt der Führungsnut ist vorzugsweise kreissegmentförmig ausgebildet. Die Steigung des wendelförmigen Bereiches beträgt zwischen 10 und 50 Grad, vorzugsweise zwischen 20 und 30 Grad.

Des Weiteren ist vorgesehen, dass zumindest ein rotationssymmetrisches Führungselement in einer hülsenförmigen Aufnahme der Werkzeugaufnahme angebracht ist. Dieses ist in Form einer Kugel, Halbkugel, oder eines Stiftes ausgebildet. Bei Verwendung einer Kugel weist diese einen Durchmesser von vorzugsweise zwischen 0,75 mm und 2 mm auf. Nach der Montage des zumindest einen Führungselements in einer Bohrung in der hülsenförmigen Aufnahme mittels Klemmen, Verkleben oder Verstemmen greift somit der herausstehende kugelsegmetförmige Teil der Kugel, der vorzugsweise eine Höhe von kleiner als dem haben Kugeldurchmesser aufweist, in die komplementär kreissegmentförmig ausgebildete Führungsnut des Werkzeuges.

Somit kann das Werkzeug mittels maximal einer Umdrehung (360 Grad), vorzugsweise mittels einer halben Umdrehung (180 Grad), in der Werkzeugaufnahme befestigt werden.

Die Kupplungsvorrichtung weist neben der Kugel-Laufbahn Verbindung des Weiteren eine reibschlüssige Verbindung auf. Diese wird durch eine vorzugsweise konische Anlagefläche an dem Werkzeug und einer komplementären Anlagefläche an der Werkzeugaufnahme gebildet. Durch das Verdrehen der beiden Kupplungselemente zueinander wird ein Reibschluss zwischen den beiden Anlageflächen hergestellt. Mittels der Kugel-Laufbahn Verbindung werden die Anlagefläche des Werkzeuges und der Werkzeugaufnahme radial und zusätzlich gleichzeitig auch axial gegeneinander verspannt. Der Winkel des Konuses beträgt zwischen 2 und 10 Grad, vorzugsweise zwischen 3 und 5 Grad.

Des Weiteren ist am Lagerbereich des Werkzeuges ein Auflagebereich in Form eines Mehrkants vorgesehen, um einen Werkzeugschlüssel anzulegen.

Die vorliegende Kupplungsvorrichtung zeichnet sich durch eine Reihe erheblicher Vorteile aus.

Die Kupplungsvorrichtung gewährleistet dem Anwender eine einfache und zeitsparende Befestigung des Werkzeuges. Durch vorzugsweise einer halben Umdrehung ist es für den Anwender möglich das Werkzeug mittels nur eines, und nicht wie im Stand der Technik beschrieben durch mehrmaliges, Ansetzen mit der Werkzeugaufnahme zu verbinden bzw. zu lösen.

Des Weiteren wird mittels der Kugel-Laufbahn Verbindung eine einfach herzustellenden und sicher bedienbaren Kupplungsvorrichtung geschaffen, da durch die Verwendung einer Kugel in Kombination mit einer Führungsnut, das Anbringen von Gewinden, mittels aufwendiger Verfahrensschritte wie Gewindeschneiden oder Härteverfahren, aber auch die Gefahr einer fehlerhaften Verbindung zwischen Werkzeug und Werkzeugaufnahme, auf Grund unsachgemäßen Einsetzens des Werkzeuges in die Werkzeugaufnahme, oder auf Grund Verschmutzungen in den Gewindegängen, vermieden werden.

Im Rahmen der Erfindung versteht es sich selbstverständlich, dass die Kupplungsvorrichtung nicht auf schwingungsübertragende Handstücke mit Schwingungsquelle zur Präparation von Oberflächen von Zähnen beschränkt ist. Vielmehr können derartige Werkzeuge und Werkzeugaufnahmen auch bei anderen angetriebenen medizinischen Handstücken verwendet werden, insbesondere bei rotierend angetriebenen Handstücken.

Nachfolgend wird die Erfindung anhand mehrerer Ausführungsbeispiele und in Verbindung mit den beigefügten Zeichnungen erläutert.

Dabei zeigt:
Figur 1 eine perspektivische Darstellung der Kupplungsvorrichtung,
Figur 2 eine perspektivische Darstellung des medizinischen, insbesondere mittels Schwingungsenergie angetriebenen, Werkzeuges mit dem ersten Kupplungselement,
Figur 3 eine Ausführungsform der an dem medizinischen, insbesondere schwingungsübertragenden, Handstück angebrachten Werkzeugaufnahme mir dem zweiten Kupplungselement,
Figur 4 einen Querschnitt durch die Kupplungsvorrichtung, wobei das Werkzeug mit der Werkzeugaufnahme verbunden ist,
Figur 5 eine perspektivische Darstellung einer alternativen Ausführungsform der Kupplungsvorrichtung,
Figur 6 eine perspektivische Darstellung eines alternativen Ausführungsbeispiels des medizinischen, insbesondere mittels Schwingungsenergie angetriebenen, Werkzeuges mit dem ersten Kupplungselement,
Figur 7 eine alternative Ausführungsform der an dem medizinischen, insbesondere schwingungsübertragenden, Handstück montierten Werkzeugaufnahme mit dem zweiten Kupplungselement,
Figur 8 einen Querschnitt durch die alternativen Ausführungsform der Kupplungsvorrichtung nach Figur 5, wobei das Werkzeug mit der Werkzeugaufnahme verbunden ist.

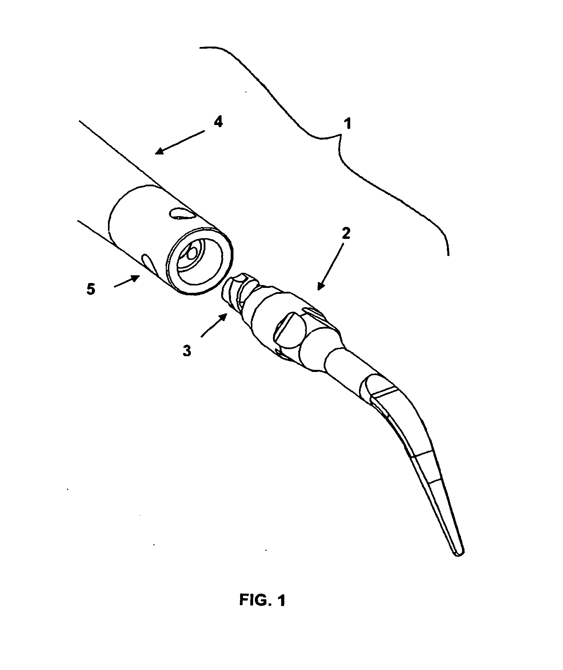

In Figur 1 ist eine Kupplungsvorrichtung 1 zur Verwendung mit einem medizinischen, insbesondere schwingungsübertragenden, Handstück abgebildet. Die Kupplungsvorrichtung 1 weist ein Werkzeug 2 mit einem ersten Kupplungselement 3 sowie eine Werkzeugaufnahme 4 mit einem zweiten Kupplungselement 5 auf.

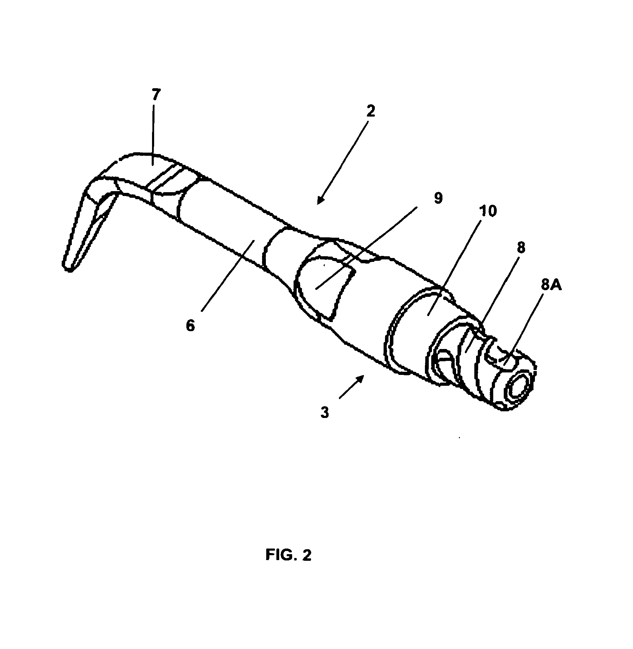

Das in Figur 2 gezeigte Werkzeug 2 zur Oberflächenbehandlung von Zähnen umfasst einen Schaft 6, an welchem ein Arbeitskopf 7 angebracht ist. Die Ausgestaltung des Arbeitskopfes 7 kann unterschiedlichste Formen aufweisen. Auf dem gegenüberliegenden Ende des Schaftes 6 grenzt das erste Kupplungselement 3 an.

Dieses umfasst mindestens eine, vorzugsweise drei, zumindest teilweise um die Längsachse der Kupplungsvorrichtung 1 wendelförmig ausgebildete Führungsnuten 8 mit einem jeweils parallel zur Längsachse der Kupplungsvorrichtung verlaufenden Führungsabschnitt 8A, sowie einen Auflagebereich 9, welcher in Form eines Mehrkants ausgebildet ist. Benachbart zum Anlagebereich 9 ist des Weiteren eine vorzugsweise konische Anlagefläche 10 ausgebildet.

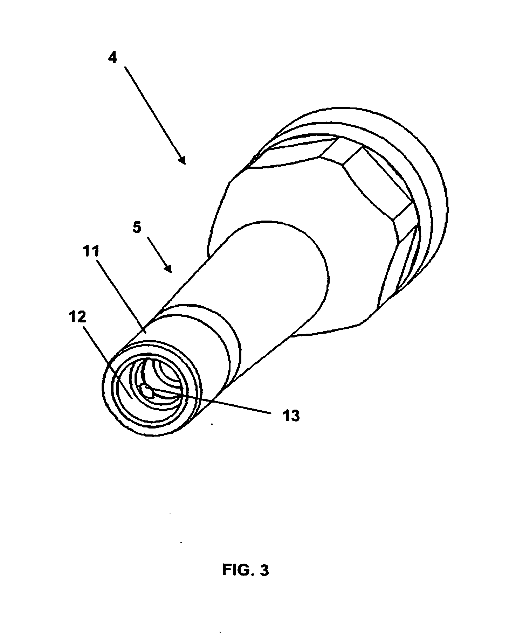

Die in Figur 3 gezeigte Werkzeugaufnahme 4, welche zur Übertragung der Schwingungsenergie auf das Werkzeug dient, weist ein zweites Kupplungselement 5 auf. Dieses umfasst eine werkzeugseitige hülsenförmige Aufnahme 11. In der Aufnahme 11 sind wiederum eine konische Anlagefläche 12 sowie mindestens ein rotationssymmetrisches Führungselement 13, vorzugsweise in Form einer Kugel, angeordnet.

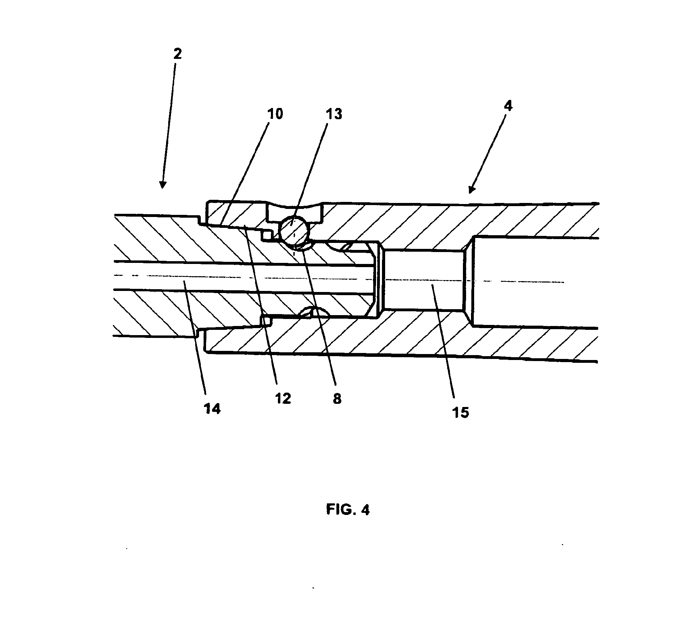

Figur 4 zeigt die Kupplungsvorrichtung 1 nachdem die Werkzeugaufnahme 4 und das Werkzeug 2 mit vorzugsweise einer halben Umdrehung miteinander verbunden wurden. Das zumindest eine Führungselement 13 des zweiten Kupplungselementes 5 greift in die Führungsnut 8 des ersten Kupplungselementes 3. Des Weiteren liegt zur reibschlüssigen Verbindung die Anlagefläche 10 an der Anlagefläche 12 an. Der Fluidkanal 14 im ersten Kupplungselement 3 und ein Längskanal 15 im zweiten Kupplungselement 5 bilden einen Durchgang für ein Medium das zur Werkzeuginnenkühlung dient.

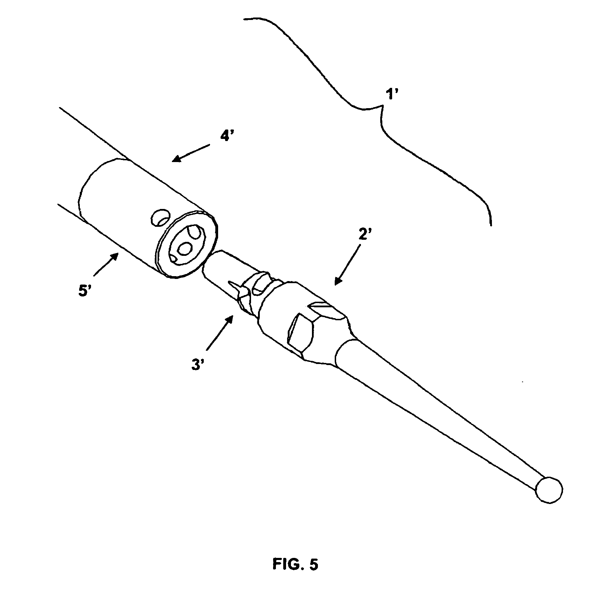

Figur 5 zeigt eine alternative Ausführungsform der Kupplungsvorrichtung 1 zur Verwendung mit einem medizinischen, insbesondere schwingungsübertragenden, Handstück. Die Kupplungsvorrichtung 1' weist ein Werkzeug 2' mit einem ersten Kupplungselement 3' sowie eine Werkzeugaufnahme 4' mit einem zweiten Kupplungselement 5' auf.

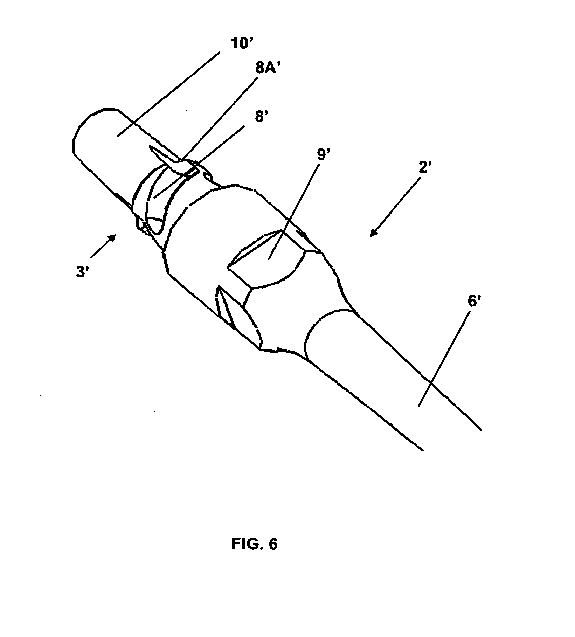

Figur 6 zeigt das Werkzeug 2' aus der Figur 5 in einer vergrößerten Darstellung. Bei dem dargestellten Werkzeug 2' ist das an den Schaft 6' angrenzende erste Kupplungselement 3' aus einem Auflagebereich 9', mindestens einer, vorzugsweise drei, zumindest teilweise um die Längsachse der Kupplungsvorrichtung wendelförmig ausgebildete Führungsnuten 8', einem parallel zur Längsachse der Kupplungsvorrichtung verlaufenden Führungsabschnitt 8A' sowie einer Anlagefläche 10' gebildet. Bei diesem Ausführungsbeispiel ist die Anlagefläche 10' des ersten Kupplungselements 3' näher am handstückseitigen Ende angebracht als die Führungsnuten 8'.

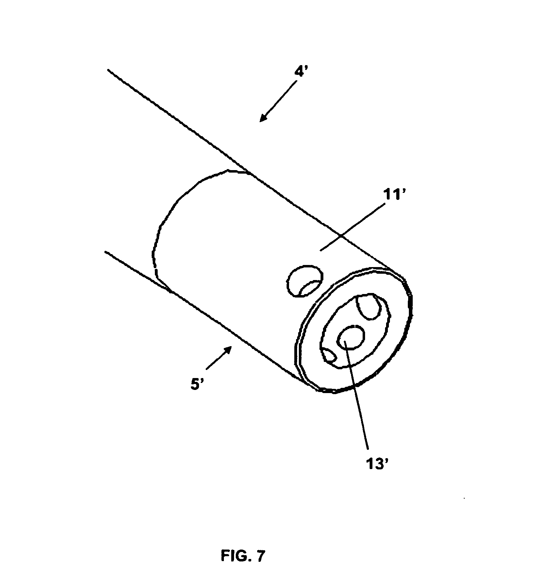

Die in Figur 7 dargestellte Werkzeugaufnahme 4' mit dem zweiten Kupplungselement 5' weist neben einer hülsenförmigen Aufnahme 11' mindestens ein rotationssymmetrisches Führungselement 13' vorzugsweise in Form einer Kugel auf.

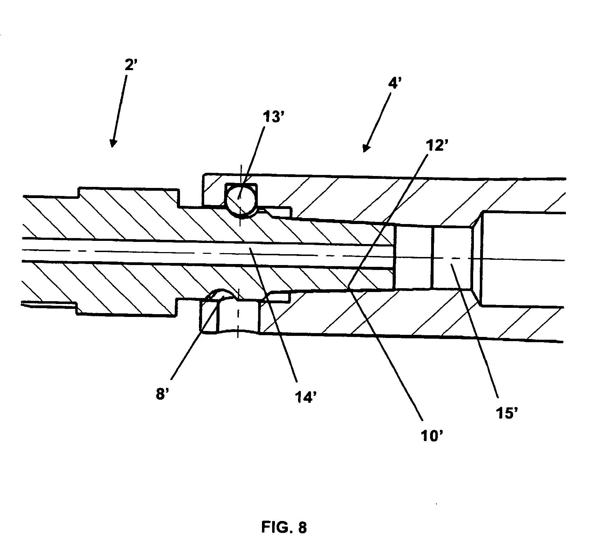

Figur 8 zeigt die Kupplungsvorrichtung 1' der Figur 5 nachdem die Werkzeugaufnahme 4' und das Werkzeug 2' mittels vorzugsweise einer halben Umdrehung miteinander verbunden wurden. Das mindestens eine Führungselement 13' greift in die mindestens eine zumindest teilweise wendelförmig um die Längsachse der Kupplungsvorrichtung ausgebildete Führungsnut 8'. Die Anlagefläche 10' liegt an der Anlagefläche 12' an und dient zur reibschlüssigen Verbindung der Kupplungselemente 3' und 5'. Der Fluidkanal 14' des ersten Kupplungselements 3' und der Längskanal 15' des zweiten Kupplungselements 5' bilden einen Durchgang für ein Kühlmedium.

Als vorteilhaft der alternativen Ausgestaltung des ersten Kupplungselements 3' erweist sich die Anordnung der Anlagefläche 10' am näheren handstückseitigen Ende als die daran anschließende Führungsnut 8' in Verbindung mit der Ausgestaltung des zweiten Kupplungselements 5' mit der Anordnung des zumindest einen Führungselements 13' näher am werkzeugseitigen Ende als der sich anschließenden Anlagefläche 12'. Die durch die Anlageflächen 10', 12' herstellbare reibschlüssige Verbindung bewirkt am hinteren Ende des ersten Kupplungselements 3' zusätzlich eine Abdichtung in der hülsenförmigen Aufnahme 11'. Hierdurch kann eine Montage des zumindest einen am aufnahmeseitigen Ende angeordneten Führungselements 13' in einer Sacklochbohrung mittels einer zum Anbringen dieser Sacklochbohrung dienenden Hilfsbohrung durch die gegenüberliegende Aussenwand der hülsenförmigen Aufnahme 11' erfolgen. Somit wird ein Austritt des zur Werkzeugkühlung dienenden Kühlmediums durch die Hilfsbohrung an der gegenüberliegenden Aussenwand vermieden.

Die Erfindung ist nicht auf die beschriebenen Ausführungsbeispiele beschränkt. Im Rahmen der Erfindung versteht es sich selbstverständlich, dass das Werkzeug an Stelle der Laufbahn mit einem Führungselement und die Werkzeugaufnahme mit der komplementären Laufbahn ausgebildet sein kann.

## Patentansprüche

1. Kupplungsvorrichtung (1, 1') zur lösbaren Verbindung eines Werkzeuges mit einer Werkzeugaufnahme eines medizinischen Handstückes mit einem ersten am Werkzeug (2, 2') vorgesehenen Kupplungselement (3, 3') und einem zweiten an der Werkzeugaufnahme (4, 4') vorgesehenen Kupplungselement (5, 5'), wobei eines der beiden Kupplungselemente (3, 3'; 5, 5') zumindest eine im Wesentlichen wendelförmig um die Längssachse der Kupplungsvorrichtung verlaufenden Führungsnut (8, 8') aufweist, in die zumindest ein Führungselement (13, 13') des anderen Kupplungselements (3, 3'; 5, 5') eingreift, **dadurch gekennzeichnet, dass** das zumindest eine Führungselement (13, 13') als Kugel oder Halbkugel ausgebildet ist.

2. Kupplungsvorrichtung (1, 1') nach Anspruch 1, **dadurch gekennzeichnet, dass** die zumindest eine Führungsnut (8, 8') im Querschnitt kreissegmentförmig ausgebildet ist.

3. Kupplungsvorrichtung (1, 1') nach einem der vorherigen Ansprüche, **dadurch gekennzeichnet, dass** an die im Wesentlichen wendelförmig um die Längssachse der Kupplungsvorrichtung verlaufende Führungsnut (8, 8') ein im Wesentlicher parallel zur Längsachse verlaufender Führungsabschnitt (8A, 8A') anschließt.

4. Kupplungsvorrichtung (1, 1') nach einem der vorherigen Ansprüche, **dadurch gekennzeichnet, dass** die im Wesentlichen wendelförmige Führungsnut (8, 8') sich mit maximal einer, vorzugsweise einer halben, Umdrehung um die Längssachse der Kupplungsvorrichtung windet.

5. Kupplungsvorrichtung (1, 1') nach einem der vorherigen Ansprüche, **dadurch gekennzeichnet, dass** an einem der beiden Kupplungselemente (3, 3'; 5, 5') mehrere Führungsnuten (8, 8') regelmäßig um die Längsachse der Kupplungsvorrichtung angeordnet sind.

6. Kupplungsvorrichtung (1, 1') nach einem der vorherigen Ansprüche, **dadurch gekennzeichnet, dass** an einem der beiden Kupplungselemente (3, 3'; 5, 5') mehrere Führungselemente (13, 13') regelmäßig um die Längsachse der Kupplungsvorrichtung angeordnet sind.

7. Kupplungsvorrichtung (1, 1') nach einem der vorherigen Ansprüche, **dadurch gekennzeichnet, dass** beide Kupplungselemente (3, 3'; 5, 5') jeweils eine Anlagefläche (10, 10'; 12, 12') zur reibschlüssigen Verbindung aufweisen.

8. Kupplungsvorrichtung (1, 1') nach Anspruch 7, **dadurch gekennzeichnet, dass** die beiden Anlagenflächen (10, 10'; 12, 12') der Kupplungselemente (3, 3'; 5, 5') konisch ausgebildet sind.

9. Kupplungsvorrichtung (1, 1') nach einem der vorherigen Ansprüche **dadurch gekennzeichnet, dass** zumindest eines der beiden Kupplungselemente (3, 3'; 5, 5') einen Auflagebereich (9, 9') zum Anlegen eines Werkzeugschlüssels aufweist.

10. Kupplungsvorrichtung (1, 1') nach Anspruch 9, **dadurch gekennzeichnet, dass** der Auflagebereich (9, 9') in Form eines Mehrkants ausgebildet ist.

11. Kupplungsvorrichtung (1, 1') nach einem der vorherigen Ansprüche, **gekennzeichnet durch** jeweils einen innen liegenden Kanal (14, 14'; 15, 15') zur Leitung von Kühlmedien.

12. Kupplungsvorrichtung (1, 1') nach einem der vorherigen Ansprüche, **dadurch gekennzeichnet, dass** beide oder eines der beiden Kupplungselemente (3, 3'; 5, 5') mit einer in Schwingung und/ oder Rotation versetzbaren Antriebsachse eines medizinischen Handstückes verbindbar oder verbunden ist.

13. Verfahren zur Herstellung einer Kupplungsvorrichtung (1,1') nach einem der Ansprüche 1 bis 12, **gekennzeichnet durch** die Schritte:
- Herstellen zumindest einer im Wesentlichen wendelförmig um die Längsachse der Kupplungsvorrichtung (1, 1') verlaufenden Führungsnut (8, 8') in einem der beiden Kupplungselemente (3, 3'; 5, 5'),
- Herstellen einer Bohrung in dem anderen Kupplungselement (3, 3'; 5, 5') mittels Durchbohren des hülsenförmigen Kupplungselements und Anbringen einer Sacklochbohrung auf der gegenüberliegenden Wand dieses Kupplungselements,
- Befestigen des zumindest einen Führungselements (13, 13') in der Sacklochbohrung mittels Verstemmen oder Klemmen und/oder Kleben am anderen der beiden Kupplungselemente.

## Claims

1. A coupling device (1, 1') for detachable connection of a tool to a tool receptacle of a medical handpiece having a first coupling element (3, 3') provided on the tool (2, 2') and a second coupling element (5, 5') provided on the tool receptacle (4, 4'), wherein one of the two coupling elements (3, 3'; 5, 5') has at least one guide groove (8, 8') running essentially in a spiral around the longitudinal axis of the coupling device, such that a guide element (13, 13') of the other coupling element (3, 3'; 5, 5') engages in this guide groove, **characterized in that** the at least one guide element (13, 13') is designed as a sphere or as a hemisphere.

2. The coupling device (1, 1') according to Claim 1, **characterized in that** the at least one guide groove (8, 8') is designed in the form of a segment of a circle in cross section.

3. The coupling device (1, 1') according to one of the preceding claims, **characterized in that** a guide section (8A, 8A') running essentially parallel to the longitudinal axis is connected to the guide groove (8, 8') running essentially in a spiral around the longitudinal axis of the coupling device.

4. The coupling device (1, 1') according to one of the preceding claims, **characterized in that** the essentially spiral-shaped guide groove (8, 8') winds around the longitudinal axis of the coupling device with maximum one, preferably one half revolution.

5. The coupling device (1, 1') according to one of the preceding claims, **characterized in that** multiple guide grooves (8, 8') are arranged regularly around the longitudinal axis of the couple device on one of the two coupling elements (3, 3'; 5, 5').

6. The coupling device (1, 1') according to one of the preceding claims, **characterized in that** multiple guide elements (13, 13') are arranged regularly around the longitudinal axis of the coupling device on one of the two coupling elements (3, 3'; 5, 5').

7. The coupling device (1, 1') according to one of the preceding claims, **characterized in that** both coupling elements (3, 3'; 5, 5') have a contact face (10, 10'; 12, 12') for frictional connection.

8. The coupling device (1, 1') according to Claim 7, **characterized in that** the two contact faces (10, 10'; 12, 12') of the coupling elements (3, 3'; 5, 5') are designed to be conical.

9. The coupling device (1, 1') according to one of the preceding claims, **characterized in that** at least one of the two coupling elements (3, 3'; 5, 5') has a supporting area (9, 9') for applying a tool wrench.

10. The coupling device (1, 1') according to Claim 9, **characterized in that** the supporting area (9, 9') is designed in the form of a polygon.

11. The coupling device (1, 1') according to one of the preceding claims, **characterized by** a channel (14, 14'; 15, 15') on the inside for conducting cooling media.

12. The coupling device (1, 1') according to any one of the preceding claims, **characterized in that** one or both of the two coupling elements (3, 3'; 5, 5') is connected or connectable to a drive axle of a medical handpiece that can be induced to oscillate and/or rotate.

13. A method for producing a coupling device (1,1') according to one of claims 1 to 12, **characterized by** the steps:
- producing at least one guide groove (8, 8') in one of the two coupling elements (3, 3'; 5, 5'), said guide groove running essentially in a spiral around the longitudinal axis of the coupling device (1, 1'),
- producing a borehole in the other coupling element (3, 3'; 5, 5') by boring through the sleeve-shaped coupling element and creating a blind borehole on the opposite wall of this coupling element,
- securing the at least one guide element (13, 13') in the blind borehole by clamping or caulking and/or adhesive bonding to the other one of the two coupling elements.

## Revendications

1. Dispositif de couplage (1, 1') pour la liaison séparable d'un outil comprenant une réception d'outil d'une pièce à main médicale comprenant un premier élément d'accouplement (3, 3') prévu sur l'outil (2, 2') et un deuxième élément d'accouplement (5, 5') prévu sur la réception d'outil (4, 4'), sachant que l'un des deux éléments d'accouplement (3, 3'; 5, 5') présente au moins une rainure de guidage (8, 8') essentiellement en spirale sur l'axe longitudinal du dispositif de couplage, dans laquelle se met en prise l'au moins un élément de guidage (13, 13') de l'autre élément d'accouplement (3, 3'; 5, 5'), **caractérisé en ce que** l'au moins un élément de guidage (13, 13') est sphérique ou hémisphérique.

2. Dispositif de couplage (1, 1') selon la revendication 1, **caractérisé en ce que** l'au moins une rainure de guidage (8, 8') est en forme de segment de cercle dans la section transversale.

3. Dispositif de couplage (1, 1') selon l'une des revendications précédentes, **caractérisé en ce qu'**un segment de guidage (8A, 8A') essentiellement parallèle à l'axe longitudinal se raccorde sur la rainure de guidage (8, 8') essentiellement en spirale sur l'axe longitudinal du dispositif de couplage.

4. Dispositif de couplage (1, 1') selon l'une des revendications précédentes, **caractérisé en ce que** la rainure de guidage (8, 8') essentiellement en spirale s'enroule avec au maximum une rotation, de préférence une demi-rotation sur l'axe longitudinal du dispositif de couplage.

5. Dispositif de couplage (1, 1') selon l'une des revendications précédentes, **caractérisé en ce que** sur l'un des deux éléments d'accouplement (3, 3'; 5, 5'), plusieurs rainures de guidage (8, 8') sont disposées régulièrement sur l'axe longitudinal du dispositif de couplage.

6. Dispositif de couplage (1, 1') selon l'une des revendications précédentes, **caractérisé en ce que** sur l'un des deux éléments d'accouplement (3, 3'; 5, 5'), plusieurs éléments de guidage (13, 13') sont disposés régulièrement sur l'axe longitudinal du dispositif de couplage.

7. Dispositif de couplage (1, 1') selon l'une des revendications précédentes, **caractérisé en ce que** les deux éléments d'accouplement (3, 3'; 5, 5') présentent respectivement une surface d'appui (10, 10'; 12, 12') pour une liaison par friction.

8. Dispositif de couplage (1, 1') selon la revendication 7, **caractérisé en ce que** les deux surfaces d'appui (10, 10'; 12, 12') des éléments d'accouplement (3, 3'; 5, 5') sont coniques.

9. Dispositif de couplage (1, 1') selon l'une des revendications précédentes, **caractérisé en ce qu'**au moins un des deux éléments d'accouplement (3, 3'; 5, 5') présente une zone d'appui (9, 9') pour appuyer une clé d'outil.

10. Dispositif de couplage (1, 1') selon la revendication 9, **caractérisé en ce que** la zone d'appui (9, 9') est polygonale.

11. Dispositif de couplage (1, 1') selon l'une des revendications précédentes, **caractérisé par** respectivement un canal intérieur (14, 14'; 15, 15') pour conduire des réfrigérants.

12. Dispositif de couplage (1, 1') selon l'une des revendications précédentes, **caractérisé en ce que** les deux ou un des deux éléments d'accouplement (3, 3'; 5, 5') peut être relié ou est relié à un axe d'entraînement d'une pièce à main médicale pouvant être mis en oscillation et/ou en rotation.

13. Procédé de fabrication d'un dispositif de couplage (1,1') selon l'une des revendications 1 à 12, **caractérisé par** les étapes :
- de fabrication d'au moins une rainure de guidage (8, 8') essentiellement en spirale sur l'axe longitudinal du dispositif de couplage (1, 1') dans un des deux éléments de guidage (3, 3'; 5, 5'),
- de fabrication d'un alésage dans l'autre élément d'accouplement (3, 3'; 5, 5') en perçant au travers de l'élément d'accouplement en forme de manchon et en pratiquant un trou borgne sur la paroi opposée de cet élément d'accouplement,
- de fixation de l'au moins un élément de guidage (13, 13') dans le trou borgne par matage ou serrage et/ou collage sur l'autre des deux éléments de couplage.
